# EUROPÄISCHE PATENTSCHRIFT

(11) **EP 3 234 554 B1**
(45) Veröffentlichungstag und Bekanntmachung des Hinweises auf die Patenterteilung: **05.09.2018**
(21) Anmeldenummer: 15805144.1
(22) Anmeldetag: 02.12.2015
(51) Int. Cl.: G01J 3/10, G01N 21/3504, G01J 3/433, G01N 21/39

(54) **ABSORPTIONSSPEKTROMETER**
ABSORPTION SPECTROMETER
SPECTROMÈTRE D'ABSORPTION

(30) Priorität: 17.12.2014 DE 102014226323; 22.12.2014 DE 102014226845
(43) Veröffentlichungstag der Anmeldung: 25.10.2017
(73) Patentinhaber: Siemens Aktiengesellschaft, 80333 München (DE)
(72) Erfinder: STEINBACHER, Franz, 76137 Karlsruhe (DE)
(86) Internationale Anmeldenummer: PCT/EP2015/078290
(87) Internationale Veröffentlichungsnummer: WO 2016/096416

(56) Entgegenhaltungen:
- EP-A1- 2 072 979
- US-A1- 2015 268 095

## Beschreibung

Die Erfindung betrifft ein Absorptionsspektrometer zur Messung der Konzentration einer Gaskomponente in einem Messgas basierend auf dem Verfahren der Wellenlängenmodulationsspektroskopie (WMS) mit
- einer wellenlängenabstimmbaren Lichtquelle,
- einer Modulationseinrichtung, die die Wellenlänge des Lichts der abstimmbaren Lichtquelle periodisch über eine interessierende Absorptionslinie der Gaskomponente entsprechend einer vorgegebenen Zeit-Funktion variiert und gleichzeitig mit hoher Frequenz und kleiner Amplitude sinusförmig moduliert,
- einem Detektor, der die Intensität des Lichts nach Durchstrahlen des Messgases detektiert, und
- einer Auswerteeinrichtung, die Mittel zur phasensensitiven Demodulation eines von dem Detektor erzeugten Messsignals bei der Frequenz und/oder einer ihrer Harmonischen enthält.

Ein derartiges Absorptionsspektrometer ist beispielsweise aus der DE 10 2013 201 459 A1 bekannt.

Bei der so genannten In-line- oder In-situ-Messung ,z. B. in der Prozessindustrie oder Energiewirtschaft, wird das Messvolumen 3 oft von einer das Messgas führenden Gasleitung, z. B. einem Rohr, einem Kamin oder dgl., gebildet. Die Lichtquelle und der Detektor sind dann an unterschiedlichen Stellen der Prozessanlage angeordnet, wozu das Spektrometer in zwei Teilgeräte, nämlich einen Sender mit der Lichtquelle und einen den Detektor enthaltenden Empfänger unterteilt ist. Diese Teilgeräte sind über eine spezielle Koppelleitung miteinander verbunden, damit sie als Gesamtgerät funktionieren können. Insbesondere wird über die Koppelleitung ein Systemtakt übertragen um eine Synchronisation zwischen Sender und Empfänger vorzunehmen, so dass das von dem Detektor erzeugte Messsignal phasensensitiv zu seiner Modulation demoduliert werden kann.

Das Vorsehen und Verlegen solcher Koppelleitungen, insbesondere in industrieller Umgebung, ist mit einem entsprechenden Aufwand verbunden.

Der Erfindung liegt daher die Aufgabe zugrunde, den geräte- und montagetechnischen Aufwand bei Absorptionsspektrometern, insbesondere bei In-situ-Absorptionsspektrometern, zu verringern.

Gemäß der Erfindung wird die Aufgabe dadurch gelöst, dass bei dem Absorptionsspektrometer der eingangs genannten Art
- die Modulationseinrichtung weiterhin dazu ausgebildet ist, in jeder oder jeder n-ten Periode die Modulation mit der Frequenz in einem Zeitintervall vor Beginn der Zeit-Funktion zu starten und mit höherer Amplitude als während der Zeit-Funktion durchzuführen, und
- die Auswerteeinrichtung dazu ausgebildet ist, während des Zeitintervalls eine Synchronisierung der Mittel zur phasensensitiven Demodulation anhand der in dem Messsignal enthaltenen Frequenz durchzuführen.

Die Synchronisation zwischen Sender und Empfänger erfolgt also in vorteilhafter Weise durch die in dem Zeitintervall vor Beginn der zur wellenlängenabhängigen Abtastung der Absorptionslinie dienenden Zeit-Funktion erfolgende sinusförmige Modulation des Lichts. Dabei ist die Modulationsamplitude vergleichsweise hoch, so dass ein ausreichend hoher Signal-Rausch-Abstand erzielt wird, um auch bei schlechten Übertragungsbedingungen, beispielsweise aufgrund von Aerosolen in dem Messgas, eine sichere Synchronisation zu gewährleisten. Wie weiter unten näher erläutert wird, erfordert im Unterschied dazu die Abtastung der Absorptionslinie der interessierenden Messgaskomponente eine vergleichsweise geringe Amplitude der überlagerten sinusförmigen Modulation, um ein optimales Messergebnis zu erhalten.

Die Synchronisierung der Mittel zur phasensensitiven Demodulation des Messsignals erfolgt vorzugsweise durch das Ausgangssignal einer Phasenregelschleife mit steuerbarem Sinusoszillator. Das Messsignal wird dem Eingang der Phasenregelschleife über einen steuerbaren Schalter zugeführt, der während des Zeitintervalls zur Durchführung der Synchronisierung geschlossen wird, so dass der Sinusoszillator mit der in dem Messsignal enthaltenen Frequenz der sinusförmigen Modulation phasengenau geregelt wird. Der Sinusoszillator erhält sein Steuersignal über ein Halteglied, das außerhalb des Zeitintervalls aktiviert wird, so dass die Regelung unterbrochen wird und der Sinusoszillator mit der zuletzt geregelten Frequenz frei weiterschwingt.

Der Zeitpunkt für den Beginn der Synchronisierung der Mittel zur phasensensitiven Demodulation des Messsignals kann aus dem Verlauf des Messsignals ermittelt werden. So kann beispielsweise durch Bandpassfilterung des Messsignals und anschließende Überwachung des bandpassgefilterten Messsignals auf Überschreiten eines Schwellenwertes detektiert werden, wann die sinusförmige Modulation mit der höheren Amplitude erfolgt. Vorzugsweise werden für den Fall, dass die Zeit-Funktion rampenförmig ist oder dass die wellenlängenabstimmbare Lichtquelle am Anfang und/oder Ende jeder Periode mit einem Burstsignal angesteuert wird, in dem Messsignal die abfallende Rampenflanke bzw. das Burstsignal detektiert, um nach einer darauf folgenden vorgegebenen Zeit die Synchronisierung durchzuführen. Dabei kann ein freilaufender Zähler, der bei jeder Detektion einer abfallenden Rampenflanke oder eines Burstsignals zurückgesetzt wird, bei Erreichen eines vorgegebenen Zählerstandes den Zeitpunkt für die Synchronisierung vorgeben.

Um die abfallende Rampenflanke oder das Burstsignal sicher in dem Messsignal detektieren zu können, wird dieses in vorteilhafter Weise vorher differenziert, so dass die steile Flanke des Rampensignals bzw. die Flanken des Burstsignals als gut aufgelöste Peaks erscheinen. Durch Zählen der Peaks können insbesondere der Anfang und das Ende des Burstsignals sicher bestimmt werden.

Im Weiteren wird die Erfindung unter Bezugnahme auf die Figuren der Zeichnung anhand von Beispielen erläutert; im Einzelnen zeigen
- Figur 1: eine schematische Darstellung eines Ausführungsbeispiels des erfindungsgemäßen Absorptionsspektrometers,
- Figur 2: ein Beispiel für den Verlauf des Stroms zur Ansteuerung der wellenlängenabstimmbaren Lichtquelle während einer Ansteuerungsperiode,
- Figur 3: ein Beispiel für eine Synchronisiereinrichtung zur Synchronisierung der Mittel zur phasensensitiven Demodulation und
- Figur 4: ein Beispiel für das differenzierte Messsignal des Detektors.

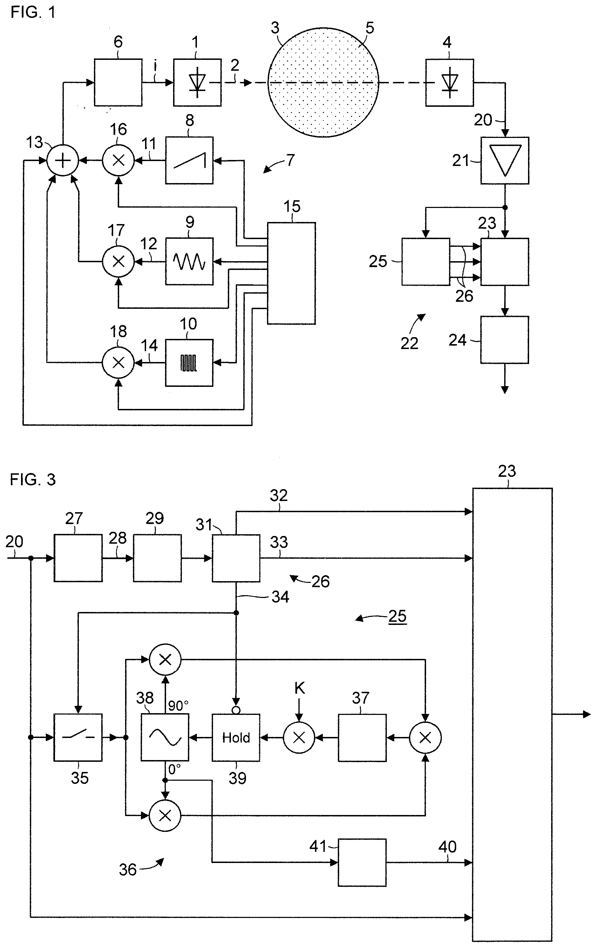

Figur 1 zeigt ein Absorptionsspektrometer mit einer wellenlängenabstimmbaren Lichtquelle 1 in Form einer Laserdiode, deren Licht 2 in Form eines Lichtstrahls durch ein Messvolumen 3 hindurch zu einem Detektor 4 geführt ist, der die Lichtintensität detektiert. Bei dem Messvolumen 3 kann es sich um eine Messzelle handeln, die ein Messgas 5 enthält, in welchem die Konzentration mindestens einer interessierenden Gaskomponente gemessen werden soll. Im Falle einer In-situ-Messung kann das Messvolumen 3 aus einer Prozessgasleitung, z. B. einem Rohr oder einem Kamin bestehen, durch die das Messgas 5 strömt. Die Laserdiode 1 und der Detektor 4 sind dann in der Regel in zwei unterschiedlichen Messköpfen angeordnet, die an diametral gegenüberliegenden Stellen mittels Flanschverbindungen an der Prozessgasleitung montiert sind und das Licht durch Fenster in die Prozessgasleitung einleiten bzw. aus dieser empfangen.

Die Laserdiode 1 wird von einer steuerbaren Stromquelle 6 mit einem Injektionsstrom i angesteuert, wobei die Intensität und Wellenlänge des erzeugten Lichts 2 von dem Strom i und der Betriebstemperatur der Laserdiode 1 abhängen. Die Stromquelle 6 wird von einer Modulationseinrichtung 7 angesteuert, die einen ersten Signalgenerator 8, einen zweiten Signalgenerator 9 und einen dritten Signalgenerator 10 enthält. Der erste Signalgenerator 8 erzeugt periodisch eine vorgegebene, vorzugsweise rampenförmige Zeit-Funktion 11, um mit dem entsprechend modulierten Licht 2 eine ausgewählte Absorptionslinie der interessierenden Gaskomponente des Messgases 5 wellenlängenabhängig abzutasten. Der zweite Signalgenerator 9 erzeugt ein sinusförmiges Signal 12 der Frequenz f, mit dem in einem Summierglied 13 die rampenförmige Zeit-Funktion 11 moduliert wird. Der dritte Signalgenerator 10 erzeugt ein Burstsignal 14, mit dem der Injektionsstrom i mehrfach nacheinander ein- und ausgeschaltet werden kann. Die zeitliche Abfolge der Signale 11, 12, 14 und deren jeweiliger Offset für die periodische Ansteuerung der Laserdiode 1 wird durch eine Steuereinheit 15 gesteuert, die auch über Multiplizierglieder 16, 17, 18 die Signalhöhen (Amplituden) einstellt.

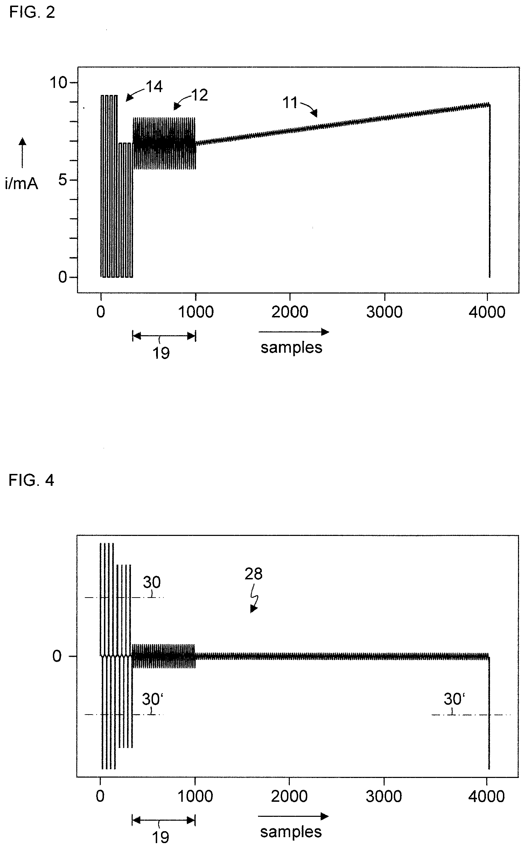

Figur 2 zeigt ein Beispiel für den Verlauf des Injektionsstroms i der Laserdiode 1 während einer Ansteuerperiode. Da die Intensität und Wellenlänge des erzeugten Lichts 2 entsprechend verlaufen und eine ausgewählte Absorptionslinie der interessierenden Gaskomponente des Messgases 5 abgetastet werden soll, sind auf der Abszisse Abtastzeitpunkte angegeben.

Zu Beginn der Periode wird der Strom i mit dem Burstsignal 14 mehrfach ein- und ausgeschaltet, wobei in zwei aufeinanderfolgenden Zeitabschnitten zwei unterschiedliche Einschalt-Stromstärken verwendet werden, die jeweils so gewählt sind, dass die resultierende Wellenlänge des Lichts 2 außerhalb der Wellenlängenbereiche der zu messenden Gaskomponente und anderer infrarotaktiver Gaskomponenten des Messgases 5 liegt. Die Periode kann auch so definiert werden, dass das Burstsignal 14 am Ende der Periode erzeugt wird, oder dass der eine der beiden Zeitabschnitte am Anfang und der andere am Ende der Periode liegt. Das Burstsignal 14 dient zur Normalisierung der Messung, wie sie beispielsweise aus der eingangs erwähnten DE 10 2013 201 459 A1 bekannt ist.

Nach Abschalten des Burstsignals 14 wird der Strom i während eines vorgegebenen Zeitintervalls 19 durch das sinusförmige Signal 10 mit der Frequenz f und mit relativ hoher Amplitude moduliert. Anschließend wird die Amplitude der sinusförmigen Modulation verringert und der Strom zusätzlich mit der rampenförmigen Zeit-Funktion 11 variiert. Dementsprechend wird auch die Wellenlänge des erzeugten Lichts 2 linear variiert, wobei ein geringer Teil des Lichts 2 von den infrarotaktiven Gaskomponenten des Messgases 1 wellenlängenabhängig absorbiert wird. Dadurch ist es möglich, die Absorptionslinie der interessierenden Gaskomponente in dem Messgas 5 wellenlängenabhängig abzutasten. Da das Profil der Absorptionslinie nicht linear ist und die Wellenlänge des Lichts 2 während der vergleichsweise langsamen Abtastung der Absorptionslinie zusätzlich mit hoher Frequenz f und kleiner Amplitude sinusförmig moduliert wird (Wellenlängenmodulationsspektroskopie oder WMS), werden auch Harmonische höherer Ordnung in der von dem Detektor 4 detektierten Lichtintensität erzeugt. Die Auswertung dieser höheren, vorzugsweise der zweiten Harmonischen durch phasensensitive Lock-in Technik ist insbesondere dann von Vorteil, wenn geringe Konzentrationen der interessierenden Gaskomponente gemessen werden sollen, weil sich dadurch Rauschen aus dem Messsignal besser ausfiltern lässt.

Wie Figur 1 zeigt, erzeugt der Detektor 4 ein der detektierten Lichtintensität entsprechendes Messsignal 20, das in einem Verstärker 21 verstärkt und anhand der an den Stellen des Burstsignals 14 detektierten Lichtintensitäten normalisiert wird. Das verstärkte Messsignal 20 wird anschließend in einer Auswerteeinrichtung 22 ausgewertet. Die Auswerteeinrichtung 22 enthält Mittel 23 zur phasensensitiven Demodulation des Messsignals 20 bei der Frequenz 2f und eine Recheneinrichtung 24, in der die 2f-Signalanteile zur Ermittlung der Konzentration der interessierenden Gaskomponente des Messgases 5 ausgewertet werden.

Damit die phasensensitive Detektion des Messsignals 20 synchron zu seiner Modulation erfolgt, werden die Mittel 23 zur phasensensitiven Demodulation während des Zeitintervalls 19 anhand der in dem Messsignal 20 enthaltenen Frequenz f synchronisiert. Dazu enthält die Auswerteeinrichtung 22 eine Synchronisiereinrichtung 25, die aus dem Messsignal 20 Steuersignale 26 zur Synchronisierung der Mittel 23 erzeugt.

Figur 3 zeigt ein Beispiel für die Synchronisiereinrichtung 25, in der das verstärkte Messsignal 20 in einem Differenzierglied 27 differenziert wird, so dass ein in Figur 4 gezeigtes Signal 28 erhalten wird. Ein nachgeordneter Schwellenwertdetektor 29 detektiert, wenn die aus dem Burstsignal 14 oder der abfallenden Flanke der rampenförmigen Zeit-Funktion 11 resultierenden Peaks des differenzierten Messsignals einen positiven Schwellenwert 30 über- oder einen negativen Schwellenwert 30' unterschreiten, und setzt einen Zähler 31 zurück. Nach dem letzten Burst-Peak oder, falls kein Burstsignal verwendet wird, nach dem Peak der abfallenden Flanke der rampenförmigen Zeit-Funktion 11 beginnt der Zähler 31 bis zum nächsten Burst oder zur nächsten Flanke aufwärts zu zählen. In Abhängigkeit von dem Zählerstand werden dann die Steuersignale 26 erzeugt, wobei diese Abhängigkeiten parametrierbar sind. Bei dem gezeigten Ausführungsbeispiel umfassen die Steuersignale 26 ein erstes Steuersignal 32 für die Zeit und Dauer des Burstsignals 14, ein zweites Steuersignal 33 für die Zeit und Dauer der Zeit-Funktion 11 und ein drittes Steuersignal 34, das das vorgegebene Zeitintervall 19 markiert, in dem die Modulation des Injektionsstromes i durch das sinusförmige Signal 10 mit der Frequenz f und mit relativ hoher Amplitude erfolgt. Mit diesem dritten Steuersignal 34 wird ein steuerbarer Schalter 35 für die Dauer des vorgegebenen Zeitintervalls 19 geschlossen, um das verstärkte Messsignal 20 einer Phasenregelschleife 36 (phase-locked loop oder PLL) zuzuführen. Die Phasenregelschleife 36 besteht bei dem gezeigten Ausführungsbeispiel aus einer Costas-Schleife (Costas loop) mit einem Schleifenfilter 37, mit dessen Ausgangssignal ein Sinusoszillator 38, hier ein DDS-VCO (direct digital synthesis; voltage-controlled oscillator) gesteuert wird. Die Verstärkung der Phasenregelschleife 36 kann durch Multiplikation des Ausgangs des Schleifenfilters 37 mit einem Faktor K eingestellt werden. Zwischen dem Schleifenfilter 37 und dem Sinusoszillator 38 ist ein Halteglied 39 angeordnet, das im Vergleich zu dem Schalter 35 invertiert angesteuert wird.

Für die Dauer des vorgegebenen Zeitintervalls 19 ist der Schalter 35 geschlossen und das Halteglied 39 deaktiviert, so dass der Sinusoszillator 38 mit der in dem Messsignal 20 enthaltenen Frequenz f phasengenau geregelt wird. Das von dem Sinusoszillator 38 erzeugte Sinussignal durchläuft einen Phasenschieber 41, bevor es als Ausgangssignal 40 der Phasenregelschleife 36 den Mitteln 23 zur phasensensitiven Demodulation des Messsignals 20 zugeführt wird. Da das Messsignal 20 bei seiner Verstärkung und der nachfolgenden Demodulation bei der Frequenz nf gefiltert wird, erfolgt in dem Phasenschieber 41 eine Phasenanpassung, welche unterschiedliche Phasengänge der Filter berücksichtigt. Das Ausgangssignal 40 der Phasenregelschleife 36 ist bezüglich Frequenz und Phase identisch mit dem sinusförmigen Modulationssignal 12, so dass das verstärkte Messsignal 20 phasengenau zur Modulation demoduliert werden kann. Die jeweilige Demodulationsfrequenz nf kann durch Frequenzvervielfachung unmittelbar aus dem Ausgangssignal 40 abgeleitet werden. Es ist möglich, zum Zwecke einer Mehrfachmodulation des erzeugten Lichts 2 die rampenförmige Zeit-Funktion 11 zusätzlich mit weiteren sinusförmigen Signalen zu modulieren, deren Frequenzen aus der Frequenz f des Modulationssignals 12 abgeleitet werden. Auch in diesem Fall kann das Messsignal 20 ohne Weiteres durch Ableitung der jeweils gewünschten Demodulationsfrequenz(en) aus dem Ausgangssignal 40 phasengenau demoduliert werden.

Da die Amplitude des sinusförmigen Modulationssignals 12 während des Zeitintervalls 19 vergleichsweise hoch ist, ist der Signal-Rausch-Abstand ausreichend hoch, um auch bei schlechten Übertragungsbedingungen, beispielsweise aufgrund von Rauchpartikeln oder Staub in dem Messgas 5, eine sichere Synchronisation zu gewährleisten.

Für die Abtastung der Absorptionslinie der interessierenden Messgaskomponente mittels der rampenförmigen Zeit-Funktion 11 muss dagegen die Amplitude der überlagerten sinusförmigen Modulation, also der Wellenlängenhub des erzeugten Lichts 2, an die Breite der abzutastenden Absorptionslinie angepasst werden und ist in der Praxis für den Zweck der Synchronisation zu gering. So ist für den idealen Fall einer lorentzförmigen Absorptionslinie der 2f-Signalanteil des Messsignals 20 bei einem Modulationsindex (Verhältnis der spektralen Modulationsamplitude zur Halbwertsbreite der abgetasteten Absorptionslinie) von 2,2 maximal.

Außerhalb des vorgegebenen Zeitintervalls 19 ist der Schalter 35 geöffnet und das Halteglied 39 aktiviert, so dass der Sinusoszillator 38 nach Maßgabe des zuletzt von dem Schleifenfilter 37 erzeugten und von dem Halteglied 39 gehaltenen Ausgangswerts frei schwingt.

## Patentansprüche

1. Absorptionsspektrometer zur Messung der Konzentration einer Gaskomponente in einem Messgas (5) basierend auf dem Verfahren der Wellenlängenmodulationsspektroskopie mit
- einer wellenlängenabstimmbaren Lichtquelle (1),
- einer Modulationseinrichtung (15), die die Wellenlänge des Lichts (2) der abstimmbaren Lichtquelle (1) periodisch über eine interessierende Absorptionslinie der Gaskomponente entsprechend einer vorgegebenen Zeit-Funktion (11) variiert und gleichzeitig mit hoher Frequenz (f) und kleiner Amplitude sinusförmig moduliert,
- einem Detektor (4), der die Intensität des Lichts (2) nach Durchstrahlen des Messgases (5) detektiert, und
- einer Auswerteeinrichtung (22), die Mittel (23) zur phasensensitiven Demodulation eines von dem Detektor (4) erzeugten Messsignals (20) bei der Frequenz (f) und/oder einer ihrer Harmonischen enthält,
**dadurch gekennzeichnet,**
- **dass** die Modulationseinrichtung (15) weiterhin dazu ausgebildet ist, in jeder oder jeder n-ten Periode die Modulation mit der Frequenz (f) in einem Zeitintervall (19) vor Beginn der Zeit-Funktion (11) zu starten und mit höherer Amplitude als während der Zeit-Funktion (11) durchzuführen, und
- **dass** die Auswerteeinrichtung (22) dazu ausgebildet ist, während des Zeitintervalls (19) eine Synchronisierung der Mittel (23) zur phasensensitiven Demodulation anhand der in dem Messsignal (20) enthaltenen Frequenz (f) durchzuführen.

2. Absorptionsspektrometer nach Anspruch 1, **dadurch gekennzeichnet, dass** die Auswerteeinrichtung (22) eine Phasenregelschleife (36) mit einem steuerbaren Sinusoszillator (38) enthält, wobei
- das Messsignal (20) der Phasenregelschleife (36) eingangsseitig über einen steuerbaren Schalter (35) zugeführt wird, welcher zur Durchführung der Synchronisierung der Mittel (23) zur phasensensitiven Demodulation geschlossen wird,
- das Ausgangssignal (40) der Phasenregelschleife (36) den Mitteln (23) zur phasensensitiven Demodulation zugeführt wird und
- das Steuersignal für den Sinusoszillator (38) diesem über ein Halteglied (39) zugeführt wird, welches außerhalb des Zeitintervalls (19), in dem die Synchronisierung durchgeführt wird, aktiviert wird.

3. Absorptionsspektrometer nach Anspruch 1 oder 2, **dadurch gekennzeichnet, dass** bei rampenförmiger Zeit-Funktion (11) die Auswerteeinrichtung (22) dazu ausgebildet ist, in dem Messsignal (20) die abfallende Rampenflanke zu detektieren, um nach einer darauf folgenden vorgegebenen Zeit die Synchronisierung der Mittel (23) zur phasensensitiven Demodulation durchzuführen.

4. Absorptionsspektrometer nach Anspruch 1 oder 2, **dadurch gekennzeichnet, dass** die Modulationseinrichtung (15) Mittel (10) aufweist, die das Licht (2) am Anfang und/oder Ende jeder Periode mit einem Burstsignal (14) modulieren, und dass die Auswerteeinrichtung (22) dazu ausgebildet ist, in dem Messsignal (20) das Burstsignal (14) zu detektieren, um nach einer darauf folgenden vorgegebenen Zeit die Synchronisierung der Mittel (23) zur phasensensitiven Demodulation durchzuführen.

5. Absorptionsspektrometer nach Anspruch 3 oder 4, **dadurch gekennzeichnet, dass** die Auswerteeinrichtung (22) einen freilaufenden Zähler (31) enthält, der bei Detektion der abfallenden Rampenflanke oder des Burstsignals (14) zurückgesetzt wird und mit Erreichen eines vorgegebenen Zählerstandes die Zeit für die Synchronisierung vorgibt.

6. Absorptionsspektrometer nach Anspruch 3 oder 4, **dadurch gekennzeichnet, dass** die Auswerteeinrichtung (22) ein Differenzierglied (27) zur Differenzierung des Messsignals (20) aufweist und dass die abfallende Rampenflanke oder die Flanken des Burstsignals (14) in dem differenzierten Messsignal (20) detektiert werden.

## Claims

1. Absorption spectrometer for measuring the concentration of a gas component in a measured gas (5), based upon the method of wavelength modulation spectroscopy, having
- a wavelength-tunable light source (1),
- a modulation device (15) which periodically varies the wavelength of the light (2) of the tunable light source (1) over an absorption line of interest of the gas component according to a specified time function (11) and simultaneously sinusoidally modulates it with a high frequency (f) and a small amplitude,
- a detector (4) which detects the intensity of the light (2) after passing through the measured gas (5), and
- an evaluating device (22) which contains means (23) for phase-sensitive demodulation of a measurement signal (20) generated by the detector (4) at the frequency (f) and/or one of its harmonics,
**characterised in that**
- the modulation device (15) is further configured to start the modulation in each period or each n-th period with the frequency (f) in a time interval (19) before the beginning of the time function (11) and carry out the modulation at a larger amplitude than during the time function (11), and
- **in that** the evaluating device (22) is configured to carry out a synchronisation of the means (23) for phase-sensitive demodulation during the time interval (19) on the basis of the frequency (f) contained in the measurement signal (20).

2. Absorption spectrometer according to claim 1, **characterised in that** the evaluating device (22) comprises a phase-locked loop (36) with a controllable sinusoidal oscillator (38), wherein
- the measurement signal (20) is fed to the phase-locked loop (36) on the input side via a controllable switch (35) which is closed to carry out the synchronisation of the means (23) for phase-sensitive demodulation,
- the output signal (40) of the phase-locked loop (36) is fed to the means (23) for phase-sensitive demodulation, and
- the control signal for the sinusoidal oscillator (38) is fed to it via a holding element (39) which is activated outside the time interval (19) in which the synchronisation is carried out.

3. Absorption spectrometer according to claim 1 or 2, **characterised in that** with a ramp-shaped time function (11), the evaluating device (22) is configured to detect the falling ramp flank in the measurement signal (20) in order, after a pre-set time following thereafter, to carry out the synchronisation of the means (23) for phase-sensitive demodulation.

4. Absorption spectrometer according to claim 1 or 2, **characterised in that** the modulation device (15) has means (10) which modulate the light (2) at the start and/or end of each period with a burst signal (14) and **in that** the evaluating device (22) is configured to detect the burst signal (14) in the measurement signal (20) in order, after a pre-set time following thereafter, to carry out the synchronisation of the means (23) for phase-sensitive demodulation.

5. Absorption spectrometer according to claim 3 or 4, **characterised in that** the evaluating device (22) comprises a free-running counter (31) which, on detection of the falling ramp flank or the burst signal (14), is reset and, on reaching a preset counter value, issues the time for the synchronisation.

6. Absorption spectrometer according to claim 3 or 4, **characterised in that** the evaluating device (22) comprises a differentiating unit (27) for differentiating the measurement signal (20) and **in that** the falling ramp flank or the flanks of the burst signal (14) are detected in the differentiated measurement signal (20).

## Revendications

1. Spectromètre d'absorption pour mesurer la concentration d'un constituant gazeux d'un gaz (5) à mesurer sur la base du procédé de la spectroscopie à modulation en longueur d'onde, comprenant
- une source (1) lumineuse pouvant être accordée en longueur d'onde,
- un dispositif (15) de modulation, qui fait varier périodiquement, sur une raie d'absorption intéressante du constituant gazeux, conformément à une fonction (11) de temps donnée à l'avance, la longueur d'onde de la lumière (2) de la source (1) lumineuse pouvant être accordée et module en même temps sinusoïdalement à une grande fréquence (f) et à une petite amplitude,
- un détecteur (4), qui détecte l'intensité de la lumière (2) après traversée du gaz (5) à mesurer et
- un dispositif (22) d'exploitation, qui comporte des moyens (23) de démodulation sensibles à la phase d'un signal (20) de mesure produit par le détecteur (4) à la fréquence (f) et/ou à l'un de ses harmoniques,
**caractérisé**
- **en ce que** le dispositif (15) de modulation est constitué, en outre, pour lancer, dans chaque période ou dans chaque énième période, la modulation à la fréquence (f) dans un intervalle (19) de temps avant le début de la fonction (11) de temps et pour l'effectuer à une amplitude plus grande que pendant la fonction (11) de temps et
- **en ce que** le dispositif (22) d'exploitation est constitué pour effectuer, à l'aide de la fréquence (f) contenue dans le signal (20) de mesure, pendant l'intervalle (19) de temps, une synchronisation des moyens (23) de démodulation sensibles à la phase.

2. Spectromètre d'absorption suivant la revendication 1, **caractérisé en ce que** le dispositif (22) d'exploitation comporte une boucle (36) de régulation de phase ayant un oscillateur (38) sinus pouvant être commandé, dans lequel
- le signal (20) de mesure est envoyé à la boucle (36) de régulation de phase, du côté de l'entrée, par un interrupteur (35), qui peut être commandé et qui est fermé pour effectuer la synchronisation des moyens (23) de démodulation sensibles à la phase,
- le signal (40) de sortie de la boucle (36) de régulation de phase est envoyé aux moyens (23) de démodulation sensibles à la phase et
- le signal de commande de l'oscillateur (38) sinus est envoyé à celui-ci par un organe (39) de maintien, qui est activé en dehors de l'intervalle (19) de temps dans lequel la synchronisation est effectuée.

3. Spectromètre d'absorption suivant la revendication 1 ou 2, **caractérisé en ce que**, pour une fonction (11) de temps en forme de rampe, le dispositif (22) d'exploitation est constitué pour détecter le front de rampe descendant dans le signal (20) de mesure, afin d'effectuer, après un temps donné à l'avance venant ensuite, la synchronisation des moyens (23) de démodulation sensibles à la phase.

4. Spectromètre d'absorption suivant la revendication 1 ou 2, **caractérisé en ce que** le dispositif (15) de modulation a des moyens (10), qui modulent la lumière (2), au début et/ou à la fin de chaque période, par un signal (14) de rafale, et **en ce que** le dispositif (22) d'exploitation est constitué pour détecter le signal (14) de rafale dans le signal (20) de mesure, afin d'effectuer, après un temps donné à l'avance venant ensuite, la synchronisation des moyens (23) de démodulation sensibles à la phase.

5. Spectromètre d'absorption suivant la revendication 3 ou 4, **caractérisé en ce que** le dispositif (22) d'exploitation comporte un compteur (31) libre, qui, a la détection du front descendant de la rampe ou du signal (14) de rafale, est remis à zéro et qui, lorsqu'un état donné à l'avance du compteur est atteint, prescrit le temps de la synchronisation.

6. Spectromètre d'absorption suivant la revendication 3 ou 4, **caractérisé en ce que** le dispositif (22) d'exploitation a un organe (27) de différenciation pour différencier le signal (20) de mesure et **en ce que** le front descendant de la rampe ou les fronts du signal (14) de rafale sont détectés dans le signal (20) de mesure différencié.
